# EUROPÄISCHE PATENTSCHRIFT

(11) **EP 0 934 847 B1**
(45) Veröffentlichungstag und Bekanntmachung des Hinweises auf die Patenterteilung: **11.02.2004**
(21) Anmeldenummer: 98124684.6
(22) Anmeldetag: 24.12.1998
(51) Int. Cl.: B60N 2/44

(54) **Belüfteter Fahrzeugsitz**
Ventilated vehicle seat
Siège de véhicule aéré

(30) Priorität: 04.02.1998 DE 19804284
(43) Veröffentlichungstag der Anmeldung: 11.08.1999
(73) Patentinhaber: DaimlerChrysler AG, 70567 Stuttgart (DE)
(72) Erfinder: Faust, Eberhard, 70597 Stuttgart (DE); Pfahler, Karl, Dr., 70180 Stuttgart (DE); Renner, Lothar, 71154 Nufringen (DE)

(56) Entgegenhaltungen:
- WO-A-97/09908
- DE-A- 3 609 095
- DE-A- 4 014 550
- DE-C- 19 628 698
- FR-A- 2 630 056
- US-A- 2 782 834

## Beschreibung

Die Erfindung betrifft einen Fahrzeugsitz gemäß dem Oberbegriff des Patentanspruchs 1.

Solche belüfteten Fahrzeugsitze dienen der Verbesserung des Sitzklimakomforts sowohl beim Einsteigen in ein geparktes, durch längere Sonneneinstrahlung überhitztes Fahrzeug, als auch über längere Fahrzeiten hinweg.

Bei einem Fahrzeugsitz dieser Art (DE 196 28 698 C1) überzieht die aus einem grobmaschigen Abstandsgewirk bestehende luftdurchflutbare Polsterschicht, die sog. Ventilationsschicht, ganzflächig eine Polsterauflage aus Gummihaar oder Schaumstoff, die auf einem Polsterträger, z.B. einem Federkern, aufliegt, und ist auf ihrer von der Polsterauflage abgekehrten Ober- oder Vorderseite von einer luftdurchlässigen Druckverteilungsschicht aus einem Abstandsgewirk, Vlies oder offenporigen Schaum überzogen. Die Druckverteilungsschicht ist von einem Polsterbezug überspannt, und zwischen Polsterbezug und Druckverteilungsschicht ist eine Bezugsfüllung eingearbeitet. Zur Belüftung der Ventilationsschicht ist eine Vielzahl von elektrisch angetriebenen Miniaturlüftern oder Miniaturventilatoren vorgesehen, die in in die Polsterauflage eingearbeiteten Luftkanälen eingesetzt sind. Diese Luftkanäle sind über die Polsterfläche verteilt angeordnet. In einem begrenzten Bereich oberhalb der Luftkanalmündungen ist jeweils auf der von der Luftkanalmündung abgekehrten Oberseite der Ventilationsschicht eine luftundurchlässige Zwischenlage, z.B. eine Folie, angeordnet, so daß hier die über den Luftkanal in die Ventilationsschicht eingeblasene Luft nicht sofort durch die Druckverteilungsschicht und dem Polsterbezug austritt, sondern umgelenkt wird und die Ventilationsschicht durchströmt. Die Miniaturlüfter saugen aus dem unterhalb des Sitzteils befindlichen Bereich des Fahrgastraums Luft an und blasen diese in die Ventilationsschicht. In der Ventilationsschicht kann sich die Luft in allen Richtungen ausbreiten und strömt bei unbesetztem Sitz durch die Druckverteilungsschicht und den Polsterbezug hindurch in den Luftraum oberhalb der Sitzoberfläche, wodurch eine rasche Abkühlung der z.B. durch Sonneneinstrahlung aufgeheizten Sitzfläche bewirkt wird. Bei besetztem Sitz strömt die Luft in der Ventilationsschicht entlang und tritt an den offenen Enden der Ventilationsschicht wieder aus. Sie erzeugt dabei einen Temperatur- und Luftfeuchtigkeitsgradienten und führt die vom Sitzenden angefeuchtete Luft ab.

Eine solche Polstergestaltung ist fertigungstechnisch sehr aufwendig und wird daher nur bei Fahrzeugsitzen für Fahrzeuge der oberen Preisklasse eingesetzt.

Der Erfindung liegt die Aufgabe zugrunde, bei einem Fahrzeugsitz der eingangs genannten Art eine kostengünstige Lösung für die Sitzbelüftung zu schaffen, so daß eine Sitzklimakomfortverbesserung auch bei Fahrzeugsitzen für Fahrzeuge der mittleren und unteren Preisklasse erreicht werden kann.

Die Aufgabe ist bei einem Fahrzeugsitz der im Oberbegriff des Patentanspruchs 1 definierten Gattung erfindungsgemäß durch die Merkmale im Kennzeichenteil des Patentanspruchs 1 gelöst.

Der erfindungsgemäße Fahrzeugsitz hat den Vorteil, daß durch die Ausbildung der Polsterauflage selbst als luftdurchflutbare Polsterschicht (Ventilationsschicht), die auf ihrer Auflageseite auf dem Polsterträger von einer luftundurchlässigen Druckverteilungsschicht abgedeckt ist, ein wesentlich einfacherer Aufbau der Polsterstruktur erzielt wird. Dies und die reduzierte Anzahl der zur Belüftung erforderlichen Ventilatoren einen für das Polster im Sitzteil und einen für das Polster in der Rückenlehne lassen die Fertigungskosten deutlich niedriger werden. Die beibehaltene Anordnung des mindestens einen Ventilators unterhalb des Polsters, und zwar unterhalb der Druckverteilungsschicht, und die dadurch bedingte Luftentnahme aus dem Raum unterhalb des Sitzes erlaubt trotz geringer Ventilator-Abmessungen einen so großen Luftdurchsatz, daß ein aufgeheiztes Polster in kurzer Zeit auf komfortable Temperaturen heruntergekühlt werden kann.

Vorteilhafte Ausführungsformen des erfindungsgemäßen Fahrzeugsitzes mit zweckmäßigen Weiterbildungen und Ausgestaltungen der Erfindung sind in den weiteren Patentansprüchen angegeben.

Die Erfindung ist anhand von in der Zeichnung dargestellten Ausführungsbeispielen im folgenden näher beschrieben. Es zeigen jeweils in schematischer Darstellung:
- Fig. 1 und 2: jeweils einen Längsschnitt eines Fahrzeugsitzes gemäß zweier Ausführungsbeispiele,
- Fig. 3: einen Längsschnitt eines modifizierten Sitzteils des Fahrzeugsitzes in Fig. 1 oder 2.

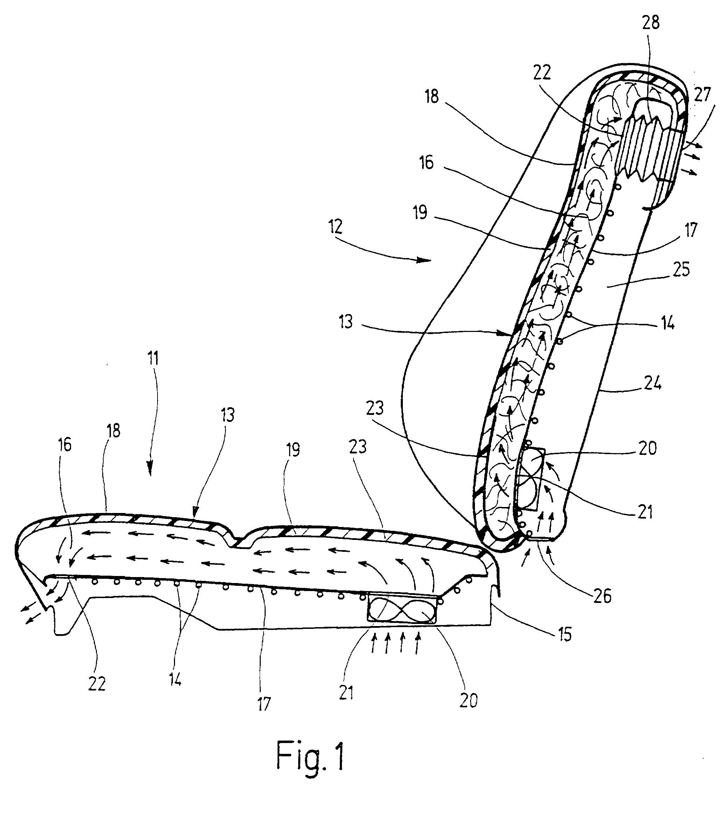

Der in Fig. 1 im Längsschnitt schematisch skizzierte Fahrzeugsitz weist in bekannter Weise ein am Fahrzeugboden verstellbar gehaltenes Sitzteil 11 und eine Rückenlehne 12 auf, die zur Neigungseinstellung über eine Schwenkrasterung mit dem Sitzteil 11 verbunden ist. Sitzteil 11 und Rückenlehne 12 besitzen jeweils ein Polster 13, das auf einem Polsterträger 14 befestigt ist. Im Ausführungsbeispiel der Fig. 1 ist der Polsterträger 14 als ein Federkern aus Federdraht ausgebildet, der jeweils in einem Rahmen befestigt ist. Im Sitzteil 11 ist der Rahmen mit 15 angedeutet, während der Rahmen in der Rückenlehne 12 der Übersichtlichkeit halber weggelassen ist. Das für Sitzteil 11 und Rückenlehne 12 in gleicher Weise aufgebaute Polster 13 umfaßt eine luftdurchlässige Polsterauflage 16 aus grob strukturiertem Vliesmaterial, z.B. Gummihaar, oder aus einem Abstandsgewirk, und eine luftundurchlässige Druckverteilungsschicht 17 aus Vlies oder Gummihaarmaterial hoher Dichte, die unmittelbar auf dem Polsterträger 14 aufliegt und die Polsterauflage 16 auf deren Unterseite im Sitzteil 11 bzw. auf deren Rückseite in der Rückenlehne 12 vollständig überdeckt. Die von der Druckverteilungsschicht 17 abgekehrte Ober- oder Vorderseite des Polsters 13 ist mit einem luftdurchlässigen Polsterbezug 18 aus Textilstoff oder perforiertem Leder oder Kunststoff überzogen, und zwischen Polsterauflage 16 und Polsterbezug 18 ist eine Bezugsfüllung 19 aus Polsterwatte, Wollvlies oder einem offenporigen oder zumindest teilweise perforierten Schaumstoff oder aus einer Watte-Schaum-Kombination eingearbeitet. Im Falle einer elektrischen Sitzheizung sind - wie hier nicht weiter dargestellt - deren Heizdrähte in der Bezugsfüllung 19 eingebettet.

Die luftdurchlässige Polsterauflage 16 stellt eine sog. Ventilationsschicht dar, die mittels eines elektrisch angetriebenen Lüfters oder Ventilators 20 mit Luft durchflutbar ist. Zur Schaffung eines Luftströmungsweges mit geringem Strömungswiderstand ist die Druckverteilungsschicht 17 mit einer Einströmöffnung 21 und einer Ausströmöffnung 22 versehen, die in Längsrichtung des Sitzteils 11 bzw. der Rückenlehne 12 gesehen, im größtmöglichen Abstand voneinander angeordnet sind. Der Ventilator 20 ist unmittelbar an der Lufteinströmöffnung 21 unterhalb der Druckverteilungsschicht 17 plaziert und an letzterer befestigt. Im Bereich der Lufteinströmöffnung 21 ist die Polsterauflage 16 auf ihrer von der Druckverteilungsschicht 17 abgekehrten Oberseite mit einer luftundurchlässigen Sperrschicht 23, z.B. einer Folie abgedeckt, so daß die über die Lufteinströmöffnung 21 einströmende Luft an dieser Stelle nicht unmittelbar über den luftdurchlässigen Polsterbezug 18 austreten kann, sondern umgelenkt wird und die Polsterauflage 16 in Längsrichtung durchströmt. Wie hier nicht weiter dargestellt ist, kann zusätzlich noch die Sperrschicht 23 über den unmittelbaren Bereich der Lufteintrittsöffnung 21 hinaus weitergeführt und hier mindestens teilweise perforiert sein, so daß verschiedene Polsterbereiche mit unterschiedlichen Intensität belüftet werden.

Im Ausführungsbeispiel der Fig. 1 ist im Sitzteil 11 die Lufteinströmöffnung 21 hinten nahe der Rückenlehne 12 und die Luftausströmöffnung 22 vorn am Sitzteil 11 angeordnet, so daß die vom Ventilator 20 aus dem Fahrzeugraum unterhalb des Sitzteils 11 angesaugte Luft die Polsterauflage 16 von hinten nach vorn durchströmt. In der Rückenlehne 12 ist die Lufteinströmöffnung 21 im unteren und die Luftausströmöffnung 22 im oberen Bereich der Rückenlehne 12 vorgesehen, so daß die Polsterauflage 16 von unten nach oben durchströmt wird. Wie allgemein üblich, ist auch hier die Rückenlehne 12 auf ihrer vom Polsterbezug 18 abgekehrten Rückseite mit einer Lehnenverkleidung 24 abgedeckt, wobei zwischen dem Polsterträger 14 und der rückwärtigen Lehnenverkleidung 24 ein Hohlraum 25 verbleibt. Der Polsterbezug 18 ist dabei über die Oberkante der Rückenlehne 12 hinweg bis in den oberen Teil der Rückseite der Rückenlehne 12 gezogen und wird dort von der Lehnenverkleidung 24 gespannt gehalten, die ihrerseits an der Unterseite der Rückenlehne 12 am Lehnenrahmen festgelegt ist. Auf der Unterseite der Rückenlehne 12 ist in der Lehnenverkleidung 24 eine Lufteintrittsöffnung 26 ausgebildet, und im oberen Bereich der Rückenlehne 12 ist in dem auf der Rückseite der Rückenlehne 12 sich erstreckenden Bereich des Polsterbezugs 18 eine Luftaustrittsöffnung 27 eingearbeitet, die über einen den Hohlraum 25 durchsetzenden Luftkanal 28 an der Luftausströmöffnung 22 in der Druckverteilungsschicht 17 angeschlossen ist. Im Ausführungsbeispiel der Fig. 1 ist der Luftkanal 28 als nachgiebiger Faltenbalg ausgeführt. Der nach wie vor der Lufteinströmöffnung 21 zugeordnete Ventilator 20 ist im Hohlraum 25 aufgenommen und saugt Luft über die Lufteintrittsöffnung 26 an der Unterseite der Rückenlehne 12 an. Die angesaugte Luft durchströmt bei besetztem Fahrzeugsitz die Polsterauflage 16 von unten nach oben und tritt über die Luftausströmöffnung 22 den Luftkanal 28 und die Luftaustrittsöffnung 27 an der Oberseite der Rückenelehne wieder in den Fahrgastraum aus. Innerhalb der Polsterauflage 16 streicht die Luft parallel zur Rückenlehnenvorderseite - ebenso wie an der Sitzoberfläche des Sitzteils 11 - unter dem Polsterbezug 18 entlang und erzeugt dabei einen Luftfeuchtigkeitsgradienten, so daß vom Sitzbenutzer angefeuchtete Luft abgeführt wird. Bei unbesetztem Sitz tritt die in der Polsterauflage 16 strömende Luft auch durch den Polsterbezug 18 hindurch in den Luftraum vor der Rückenlehne bzw. über der Sitzteiloberfläche und bewirkt dadurch eine rasche Abkühlung des z.B. durch Sonneneinstrahlung aufgeheizten Fahrzeugsitzes. Um diesen Effekt zu nutzen, ist es sinnvoll, den Einschaltvorgang der beiden Ventilatoren 20 im Sitzteil 11 und in der Rückenlehne 12 mit dem Entriegeln der Fahrzeugtüren durch eine Fernschließvorrichtung zu koppeln, so daß die Abkühlung des Fahrzeugsitzes schon vor Einsteigen in das Fahrzeug einsetzt. Dadurch, daß die Luft aus dem Bereich unterhalb des Fahrzeugsitzes angesaugt wird, wird der Kühleffekt verstärkt, da in einem beim Parken aufgeheizten Fahrzeug die Temperatur im Bereich unterhalb des Fahrzeugsitzes am niedrigsten ist.

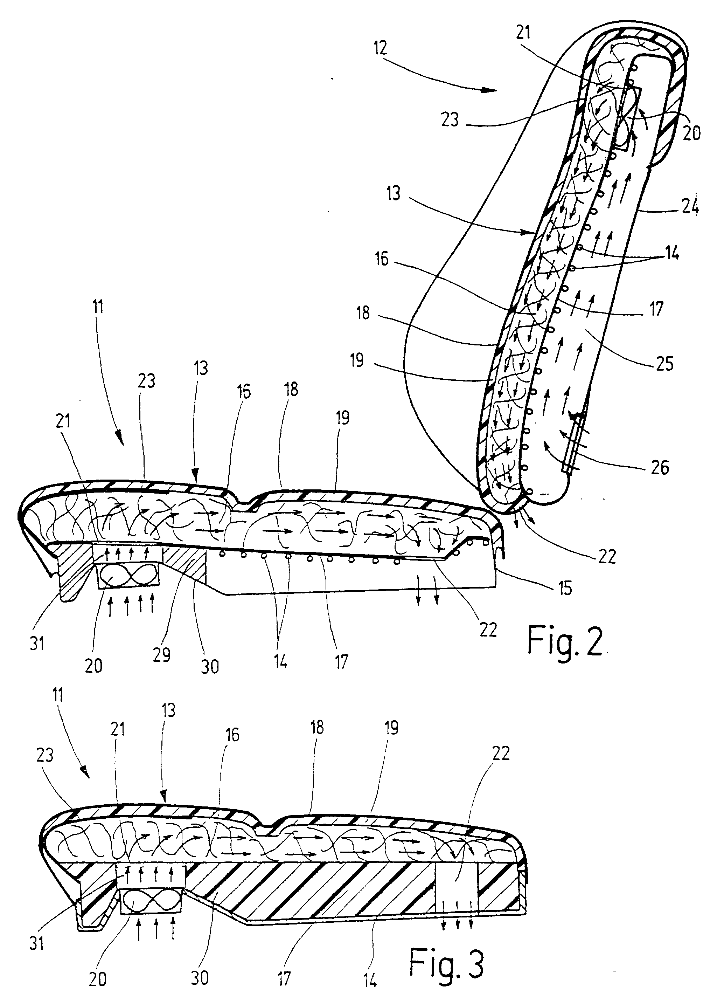

Der in Fig. 2 skizzierte Fahrzeugsitz ist gegenüber dem eben beschriebenen Fahrzeugsitz gemäß Fig. 1 insoweit modifiziert, als die Luftströmung in der Polsterauflage 16 des Polsters 13 im Sitzteil 11 von vorn nach hinten und in der Polsterauflage 16 des Polsters 13 in der Rückenlehne 12 von oben nach unten geführt ist. Hierzu ist die Lufteinströmöffnung 21 in der Druckverteilungsschicht 17 nahe dem vorderen Ende des Sitzteils 11 und die Luftausströmöffnung 22 nahe dem hinteren Ende des Sitzteils 11 in der Druckverteilungsschicht 17 angeordnet. Im vorderen Bereich des Sitzteils 11 ruht das Polster 13 nicht auf Federn sondern stützt sich über einen elastischen Schaumstoffkörper 29 auf einem im Sitzteilrahmen 15 ausgebildeten sog. Antisubmarining-Keil 30 ab. Der elastische Schaumstoffkörper 29 sorgt für das erforderliche Einfederungsverhalten des Sitzes bei extrem starkem Abbremsvorgang oder beim Crash und bildet gleichzeitig einen Luftkanal 31, der die Lufteinströmöffnung 21 in der Druckverteilungsschicht 17 mit dem an der Unterseite des Antisubmarining-Keils 30 befestigten Ventilators 20 verbindet. Wird auf eine Abstützung der Polsterauflage 16 am Antisubmarining-Keil 30 durch den Schaumstoffkörper 29 verzichtet und der Federkern durchgehend wie in Fig. 1 ausgebildet, so wird die Lufteinströmöffnung 21 über einen Faltenbalg an dem von unten an dem Antisubmarining-Keil 30 befestigten Ventilator 20 angeschlossen.

Um die Polsterauflage 16 der Rückenlehne 12 mit kühler Luft aus dem unteren Bereich der Fahrgastzelle zu versorgen, ist die Lufteintrittsöffnung 26 wieder im unteren Bereich der Rückenlehne 12 in der Lehnenverkleidung 24 ausgebildet, und zwar diesmal nicht an der Unterseite sondern an der Rückseite der Rückenlehne 12, und der Hohlraum 25 zwischen Lehnenverkleidung 24 und Polster 13 wird als Luftführungskanal genutzt, in dem die über die Lufteintrittsöffnung 26 angesaugte Luft nach oben strömt und hier über die Lufteintrittsöffnung 26 in die luftdurchlässige Polsterauflage 16 eintritt. Die Luftansaugung erfolgt wiederum mittels des Ventilators 20, der in gleicher Weise in der Lufteinströmöffnung 21 angeordnet und an der luftundurchlässigen Druckverteilungsschicht 16 befestigt ist. Die Luftausströmöffnung 22 ist an der Unterseite der Rückenlehne 12 plaziert.

In Fig. 3 ist ein gegenüber Fig. 2 modifiziertes Sitzteil 11 dargestellt. Hier ist der Polsterträger 14 nicht als Federkern sondern als Sitzschale ausgeführt, in der ebenfalls ein Antisubmarining-Keil 30 ausgebildet ist. Die luftundurchlässige Druckverteilungsschicht 17 ist hier nicht als dünne Schicht aus Vlies oder Gummihaarmaterial großer Dichte, sondern als dichtes Schaumpolster ausgeführt, das sich auf der Sitzschale abstützt und die Lufteinströmöffnung 21 und Luftausströmöffnung 22 als jeweils das Schaumpolster durchdringende Kanäle enthält. Wie bei dem Sitzteil 11 in Fig. 2 ist die Lufteinströmöffnung 21 nahe dem vorderen und die Luftausströmöffnung 22 nahe dem hinteren Ende des Sitzteils 11 angeordnet, so daß die vom Ventilator 20, der an der Unterseite des Antisubmarining-Keils 30 befestigt ist, erzeugte Luftströmung in der Polsterauflage 16 von vorn nach hinten geführt ist. Eine gleichartige Ausbildung der Rückenlehne in Fig. 2 mit einem solchen Schaumpolster ist möglich.

## Patentansprüche

1. Fahrzeugsitz mit einem in einem Sitzteil (11) und/oder in einer Rückenlehne (12) integrierten, von einem polsterträger (14) aufgenommenen Polster (13), das eine luftdurchflutbare Ventilationsschicht (16) und einen die dem Sitzenden zugekehrte Polsteroberfläche überspannenden, luftdurchlässigen Polsterbezug (18) aufweist, und mit mindestens einem auf der von der Polsteroberfläche abgekehrten Unter- oder Rückseite des Polsters (13) angeordneten Ventilator (20) zum Einblasen von Luft in die Ventilationsschicht,
**dadurch gekennzeichnet,**
**daß** die Ventilationsschicht eine luftdurchlässige Polsterauflage (16) ist, die unter Zwischenlage einer luftundurchlässigen Druckverteilungsschicht (17) auf dem Polsterträger (14) aufliegt und daß die Druckverteilungsschicht (17) mindestens eine Einströmöffnung (21) für die Ventilationsluft aufweist, an der der Ventilator (20) unterhalb der Druckverteilungsschicht (17) angeordnet ist.

2. Sitz nach Anspruch 1,
**dadurch gekennzeichnet,**
**daß** die luftdurchlässige Polsterauflage (16) aus grobstrukturiertem Vliesmaterial, Gummihaar oder aus einem Abstandsgewirk besteht.

3. Sitz nach Anspruch 1 oder 2,
**dadurch gekennzeichnet,**
**daß** im größtmöglichen Längsabstand von der Lufteinströmöffnung (21) mindestens eine Luftausströmöffnung (22) in der Druckverteilungsschicht (17) ausgebildet ist.

4. Sitz nach einem der Ansprüche 1 - 3,
**dadurch gekennzeichnet,**
**daß** der Polsterträger (14) ein in einem Rahmen (15) aufgespannter Federkern ist und die luftundurchlässige Druckverteilungsschicht (17) aus Vlies oder Gummihaarmaterial großer Dichte besteht.

5. Sitz nach einem der Ansprüche 1 - 3,
**dadurch gekennzeichnet,**
**daß** der Polsterträger (14) eine Schale ist und die luftundurchlässige Druckverteilungsschicht (17) als ein auf der Schale sich abstützendes Schaumpolster ausgebildet ist.

6. Sitz nach einem der Ansprüche 1 - 5,
**dadurch gekennzeichnet,**
**daß** im Bereich der Lufteinströmöffnung (21) auf der Oberseite der luftdurchlässigen Polsterauflage (16) eine luftundurchlässige Sperrschicht (23), z.B. eine Folie, angebracht ist.

7. Sitz nach Anspruch 6,
**dadurch gekennzeichnet,**
**daß** die Sperrschicht (23) sich über den unmittelbaren Bereich der Lufteintrittsöffnung (21) hinaus erstreckt und in diesem Erstreckungsbereich mindestens teilweise perforiert ist.

8. Sitz nach einem der Ansprüche 1 - 7,
**dadurch gekennzeichnet,**
**daß** die Luftströmung in der luftdurchlässigen Polsterauflage (16) des Polsters (13) im Sitzteil (11) von hinten nach vorn geführt und der Ventilator (20) unmittelbar an der Unterseite der Druckverteilungsschicht (17) befestigt ist.

9. Sitz nach einem der Ansprüche 1 - 7,
**dadurch gekennzeichnet,**
**daß** die Luftströmung in der luftdurchlässigen Polsterauflage (16) des Polsters (13) im Sitzteil (11) von vorn nach hinten geführt und der Ventilator (20) unterhalb eines im Sitzteil (11) ausgebildeten Antisubmarining-Keils (30) befestigt und über einen vorzugsweise elastischen Luftkanal (31) an die Lufteinströmöffnung (21) angeschlossen ist.

10. Sitz nach Anspruch 9,
**dadurch gekennzeichnet,**
**daß** die Druckverteilungsschicht (17) im Bereich des Antisubmarining-Keils (30) auf einen an diesem sich abstützenden Schaumstoffkörper (29) aufliegt und daß der Luftkanal (31) im Schaumstoffkörper (29) ausgebildet ist.

11. Sitz nach einem der Ansprüche 1 - 10,
**dadurch gekennzeichnet,**
**daß** die Rückenlehne (12) auf ihrer vom Polsterbezug (18) abgekehrten Rückseite mit einer Lehnenverkleidung (24) überzogen und zwischen Polster (13) und Lehnenverkleidung (14) ein Hohlraum (25) mit Lufteintrittsöffnung (26) ausgebildet ist und daß der Ventilator (20) im Hohlraum (25) untergebracht ist.

12. Sitz nach Anspruch 11,
**dadurch gekennzeichnet,**
**daß** die Luftströmung in der luftdurchlässigen Polsterauflage (16) von unten nach oben geführt ist, daß die Lufteintrittsöffnung (26) an der Unterseite des Hohlraums (25) in der Lehnenverkleidung (24) ausgebildet ist, daß die Lehnenverkleidung (24) oder der über die Oberkante der Rückenlehne (12) auf deren Rückseite gezogene Polsterbezug (18) im oberen Bereich der Rückenlehne (12) eine Luftaustrittsöffnung (27) aufweist, die über einen den Hohlraum (25) durchsetzenden Luftkanal (28) an die Luftausströmöffnung (27) in der Druckverteilungsschicht (17) angeschlossen ist.

13. Sitz nach Anspruch 11,
**dadurch gekennzeichnet,**
**daß** die Luftströmung in der luftdurchlässigen Polsterauflage (16) von oben nach unten geführt ist, daß die Lufteintrittsöffnung (26) im unteren Bereich des Hohlraums (25) in der Lehnenverkleidung (14) ausgebildet ist und daß die Luftausströmöffnung (22) in dessen Rückseite in der Druckverteilungsschicht (17) an der Unterseite der Rückenlehne (12) angeordnet ist.

14. Sitz nach einem der Ansprüche 1 - 13,
**dadurch gekennzeichnet,**
**daß** zwischen der luftdurchlässigen Polsterauflage (16) und dem Polsterbezug (18) eine Bezugsfüllung (19) angeordnet ist.

15. Sitz nach Anspruch 14,
**dadurch gekennzeichnet,**
**daß** die Bezugsfüllung (19) aus Polsterwatte, Wollvlies, einer offenporigen oder zumindest teilweise perforierten Schaumstoffschicht oder aus einer Watte-Schaumstoff-Kombination besteht.

16. Sitz nach Anspruch 14 oder 15,
**dadurch gekennzeichnet,**
**daß** in der Bezugsfüllung (19) die Heizleiter einer elektrischen Sitzheizung eingebettet sind.

17. Sitz nach einem der Ansprüche 1 - 16,
**dadurch gekennzeichnet,**
**daß** der Polsterbezug (18) aus Textilstoff oder perforiertem Leder oder Kunststoff besteht.

## Claims

1. Vehicle seat with a cushion (13) comprising a ventilation layer (16) through which air can flow and an air-permeable cushion cover (18) covering the cushion surface facing the seated person, said cushion being integrated into a seat part (11) or a backrest (12) and contained in a cushion base (14), and with at least one fan (20) for blowing air into the ventilation layer located on the underside or at the rear of the cushion (13) remote from the cushion surface,
**characterised in that**
the ventilation layer is an air-permeable cushion support (16) lying on the cushion base (14) with an air-tight pressure distribution layer (17) placed in between, and **in that** the air distribution layer (17) has at least one admission port (21) for the ventilation air, on which the fan (20) is located below the pressure distribution layer (17).

2. Seat according to claim 1,
**characterised in that**
the air-permeable cushion support (16) is made of a coarsely structured nonwoven fabric, rubberised hair or spacer fabric.

3. Seat according to claim 1 or 2,
**characterised in that**
at least one air discharge port (22) is provided in the pressure distribution layer (17) at the greatest possible distance from the air admission port (21).

4. Seat according to any of claims 1 to 3,
**characterised in that**
the cushion base (14) is a spring core mounteded within a frame (15), and **in that** the air-tight pressure distribution layer (17) is made of a high-density nonwoven fabric or rubberised hair material.

5. Seat according to any of claims 1 to 3,
**characterised in that**
the cushion base (14) is a shell, and **in that** the air-tight pressure distribution layer (17) is designed as a foam cushion supported on the shell.

6. Seat according to any of claims 1 to 5,
**characterised in that**
an air-tight barrier layer (23), for instance a foil, is arranged in the region of the air admission port (21) on top of the air-permeable cushion support (16).

7. Seat according to claim 6,
**characterised in that**
the barrier layer (23) extends beyond the immediate region of the air admission port (21) and is at least partially perforated in this region.

8. Seat according to any of claims 1 to 7,
**characterised in that**
the airflow in the air-permeable cushion support (16) of the cushion (13) is guided from the back towards the front in the seat part (11), and **in that** the fan (20) is attached directly to the underside of the pressure distribution layer ( 17).

9. Seat according to any of claims 1 to 7,
**characterised in that**
the airflow in the air-permeable cushion support (16) of the cushion (13) is guided from the front towards the back in the seat part (11), and **in that** the fan (20) is mounted below an anti-submarining wedge (30) provided in the seat part (11) and connected to the air admission port (21) via a preferably flexible air duct (31).

10. Seat according to claim 9,
**characterised in that**
the pressure distribution layer (17) lies on a foam body (29) supported on the anti-submarining wedge (30) in the region thereof, and **in that** the air duct (31) is provided in the foam body (29).

11. Seat according to any of claims 1 to 10,
**characterised in that**
the rear of the backrest (12) remote from the cushion cover (18) is provided with a backrest panel (24) and a cavity (25) with an air admission port (26) is formed between the cushion (13) and the backrest panel (14), and **in that** the fan (20) is located in the cavity (25).

12. Seat according to claim 11,
**characterised in that**
the airflow in the air-permeable cushion support (16) is guided from the bottom towards the top, **in that** the air admission port (26) is located at the bottom of the cavity (25) in the backrest panel (24), and **in that** the backrest panel (24) or the cushion cover (18) extending over the upper edge of the backrest (12) to its rear has an air discharge port (27) in the upper region of the backrest (12), which is connected to the air discharge port (27) in the pressure distribution layer (17) via an air duct (28) extending through the cavity (25).

13. Seat according to claim 11,
**characterised in that**
the airflow in the air-permeable cushion support (16) is guided from the top towards the bottom, **in that** the air admission port (26) is located in the lower region of the cavity (25) in the backrest panel (14), and **in that** the air discharge port (22) at the rear thereof is located in the pressure distribution layer (17) on the underside of the backrest (12).

14. Seat according to any of claims 1 to 13,
**characterised in that**
a cover filling (19) is provided between the air-permeable cushion support (16) and the cushion cover (18).

15. Seat according to claim 14,
**characterised in that**
the cover filling (19) is made of upholstery wadding, wool fleece, an open-pore or at least partially perforated foam layer of a combination of wadding and foam.

16. Seat according to claim 14 or 15,
**characterised in that**
the heating conductors of an electric seat heater are embedded in the cover filling (19).

17. Seat according to any of claims 1 to 16,
**characterised in that**
the cushion cover (18) is made of a textile material or perforated leather or plastic.

## Revendications

1. Siège de véhicule avec un rembourrage (13) intégré dans une partie de siège (11) et/ou dans un dossier (12) et réceptionné par un support de rembourrage (14), qui présente une couche de ventilation (16) pouvant être traversée par l'air et un habillage de rembourrage (18) recouvrant la surface de rembourrage tournée vers la personne assise et perméable à l'air, et avec au moins un ventilateur (20) disposé sur le côté inférieur ou le côté arrière, opposé à la surface du rembourrage (13) pour l'insufflation d'air dans la couche de ventilation, **caractérisé en ce que** la couche de ventilation est un appui rembourré (16) perméable à l'air, qui repose sur une couche intermédiaire d'une couche de répartition de pression (17) imperméable à l'air sur le support de rembourrage (14) et **en ce que** la couche de répartition de pression (17) présente au moins un orifice d'admission (21) pour l'air de ventilation, sur lequel le ventilateur (20) est disposé au-dessous de la couche de répartition de pression (17).

2. Siège selon la revendication 1, **caractérisé en ce que** l'appui de rembourrage rembourré (16) perméable à l'air est à base de matériau non tissé à structure grossière, de poil en caoutchouc ou d'un maillage d'écartement.

3. Siège selon la revendication 1 ou 2, **caractérisé en ce qu'**au moins un orifice d'évacuation d'air (22) est réalisé dans la couche de répartition de pression (17) à la distance longitudinale la plus grande possible de l'orifice d'entrée d'air (21).

4. Siège selon l'une quelconque des revendications 1 à 3, **caractérisé en ce que** le support de rembourrage (14) est un noyau à ressort tendu dans un cadre (15) et la couche de répartition de pression (17) imperméable à l'air est à base de non-tissé ou de matériau de poil de caoutchouc de grande densité.

5. Siège selon l'une quelconque des revendications 1 à 3, **caractérisé en ce que** le support de rembourrage (14) est une coque et la couche de répartition de pression (17), imperméable à l'air, est conçue comme un rembourrage en mousse s'appuyant sur la coque.

6. Siège selon l'une quelconque des revendications 1 à 5, **caractérisé en ce que** dans la zone de l'orifice d'admission d'air (21), une couche d'arrêt (23) imperméable à l'air, par exemple un film, est disposée sur le côté supérieur de l'appui du rembourrage (16) perméable à l'air.

7. Siège selon la revendication 6, **caractérisé en ce que** la couche d'arrêt (23) s'étend au-delà de la zone immédiate de l'orifice d'entrée d'air (21) et est au moins partiellement perforée dans cette zone d'étirement.

8. Siège selon l'une quelconque des revendications 1 à 7, **caractérisé en ce que** l'écoulement d'air dans l'appui de rembourrage (16) perméable à l'air du rembourrage (13) dans l'assise (11) est guidé de l'arrière vers l'avant et le ventilateur (20) est fixé directement sur le dessous de la couche de répartition de pression (17).

9. Siège selon l'une quelconque des revendications 1 à 7, **caractérisé en ce que** l'écoulement d'air dans l'appui de rembourrage (16) perméable à l'air du rembourrage (13) dans l'assise (11) est guidé de l'avant vers l'arrière et le ventilateur (20) est fixé au-dessous d'une clavette anti-sous-marine conçue dans l'assise (11) et est raccordé par un canal d'air (11) de préférence élastique à l'orifice d'arrivée d'air (21).

10. Siège selon la revendication 9, **caractérisé en ce que** la couche de répartition de pression (17) dans la zone de la clavette anti-sous-marine (30) repose sur un corps en mousse (29) s'appuyant sur cette clavette et **en ce que** le canal d'air (31) est réalisé dans le corps en mousse (29).

11. Siège selon l'une quelconque des revendications 1 à 10, **caractérisé en ce que** le dossier (12) est recouvert sur son côté arrière, opposé à l'habillage de rembourrage (18), avec un habillage de dossier (24) et une cavité (25) est réalisée avec une ouverture d'entrée d'air (26) entre le rembourrage (13) et l'habillage de dossier (14) et **en ce que** le ventilateur (20) est logé dans la cavité (25).

12. Siège selon la revendication 11, **caractérisé en ce que** l'écoulement d'air dans l'appui de rembourrage (16) perméable à l'air est guidé du haut vers le bas, **en ce que** l'orifice d'entrée d'air (26) est réalisé sur le côté inférieur de la cavité (25) dans l'habillage de dossier (24), **en ce que** l'habillage de dossier (24) ou l'habillage de rembourrage (18) tiré par-dessus le bord supérieur du dossier (12) sur son côté arrière présente dans la zone supérieure du dossier (12) une ouverture de sortie d'air (27), qui est raccordée par un canal d'air (28) traversant la cavité (25) à l'ouverture de sortie d'air (27) dans la couche de répartition de pression (17).

13. Siège selon la revendication 11, **caractérisé en ce que** l'écoulement d'air dans l'appui de rembourrage (16) perméable à l'air est guidé du haut vers le bas, **en ce que** l'orifice d'écoulement d'air (26) est réalisée dans la zone inférieure de la cavité (25) dans l'habillage de dossier (14) et **en ce que** l'orifice de sortie d'air (22) est disposé dans son côté arrière dans la couche de répartition de pression (17) sur le côté inférieur du dossier (12).

14. Siège selon l'une quelconque des revendications 1 à 13, **caractérisé en ce qu'**un remplissage de l'habillage (19) est disposé entre l'appui de rembourrage (16) perméable à l'air et l'habillage du rembourrage (18)

15. Siège selon la revendication 14, **caractérisé en ce que** le remplissage de l'habillage (19) est à base d'ouate de rembourrage, de non-tissé de laine, d'une couche de mousse à pores ouverts ou tout du moins partiellement perforée ou d'une combinaison ouate-mousse.

16. Siège selon la revendication 14 ou 15, **caractérisé en ce que** les conducteurs chauffants d'un chauffage de siège électrique sont enrobés dans le remplissage de l'habillage (19).

17. Siège selon l'une quelconque des revendications 1 à 16, **caractérisé en ce que** l'habillage du rembourrage (18) est à base de tissu textile ou de cuir perforé ou de matière synthétique.
